# EUROPEAN PATENT APPLICATION

(11) **EP 3 783 793 A1**
(43) Date of publication of application: **24.02.2021**
(21) Application number: 19192526.2
(22) Date of filing: 20.08.2019
(51) Int. Cl.: H02N 1/04

(54) **HIGH SURFACE AREA POLYMERIC FILMS FOR TRIBOELECTRIC-BASED APPLICATIONS**

(71) Applicant: SABIC Global Technologies B.V., 4612 PX Bergen op Zoom (NL)
(72) Inventor: TAYEB, Mohammed A., 23955-6900 Thuwal (SA); ALAKEL, Sahel, 23955-6900 Thuwal (SA); ALHAKAMI, Mohannad, 23955-6900 Thuwal (SA); ALSHARIF, Yasir, 23955-6900 Thuwal (SA); ALSALEM, Fahad Khalid, 23955-6900 Thuwal (SA)
(74) Representative: Elzaburu S.L.P.

(57) **Abstract**

A triboelectric sensor includes a substrate layer, at least one electrode layer, and at least a first triboelectric layer including a triboelectric polymer. The first triboelectric layer is applied to the at least one electrode layer by a process including: dissolving the triboelectric polymer in a solution; and drop casting the solution onto the electrode layer at a temperature below 0 degrees Celsius (°C) to form the first triboelectric layer. The first triboelectric layer has a surface roughness of at least 0.3 micron (µm) as determined by an optical profiler.

## Description

### FIELD OF THE DISCLOSURE

The present disclosure relates to polymeric films, and in particular to high surface area polymeric films for triboelectric-based applications.

### BACKGROUND OF THE DISCLOSURE

There are several methods to deposit a polymer on a substrate. One method is vacuum evaporation, in which polymers are dissolved into some solvent and the mixture is deposited and evaporated onto a substrate. This is a fairly simple method to use, but it requires the solvent and polymer mixture to have boiling points that are close enough to each other yet far enough from each of their decomposition temperatures. It can be challenging to find suitable solvent/polymer matches, and depending on the boiling temperature of the mixture and the concentration gradient from one area to the other, the deposition may be non-uniform in nature.

Another method of deposition is spin coating, in which a material is drop casted onto a substrate and spun at high speeds to spread the materials evenly. This method is also simple to use, but to achieve uniformity, high spin speeds are necessary, which requires that the mixture have a viscosity high enough to ensure a uniform layer of material remains on the surface.

A third deposition method is dip coating in which a substrate is dipped into a pool of active material, entirely covering it. A drawback to this method is that the substrate is coated on both sides, wasting the active material. In addition, it is difficult to control the thickness of the material, as it is dependent on conditions such as withdrawal speed, evaporation condition (i.e., humidity and temperature), volatility, and viscosity of the solvent.

In another method, known as the Breath-figure technique, moist air is passed over the substrate, creating condensed water droplets on the surface before and during the coating process thus forming a porous, sponge-like film. The Breath-figure technique works best in very high humidity >80% conditions and in the presence of nonpolar solvents, and is not effective in the presence of highly polar solvents such as dimethylformamide (DMF) or tetrahydrofuran (THF). Moreover, the Breath-figure technique mostly forms a porous structure only in the upper layer of the film.

A further method of depositing a polymer on a substrate is spray coating. In this method material is sprayed onto a substrate using an ultra-sonicated nozzle or gravity. One limitation of this method is the need to use very low concentrations of polymer in the solvent due to the small size of pipes and nozzles through which the material flows. As a result, it may take a long time to create sufficiently thick polymer films and will require constant heating and the handling of large volumes of solvent to prepare films.

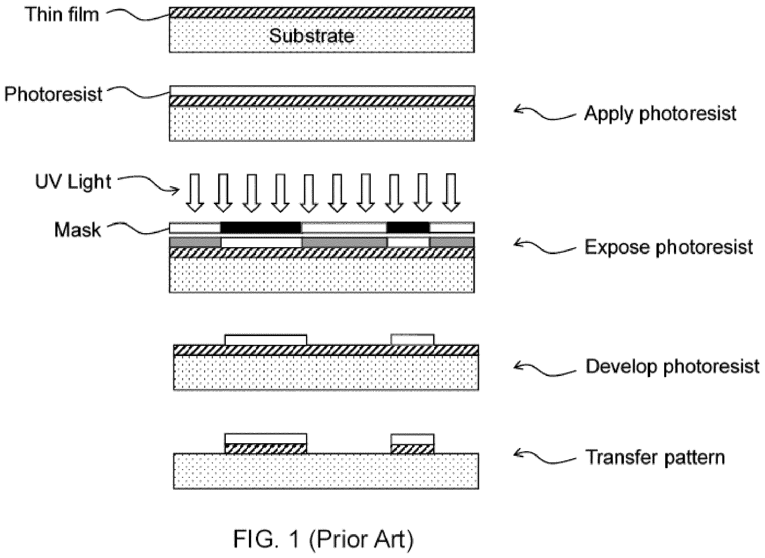

Typically, a triboelectric sensor is formed by coating thin film conductive and active layers on flexible or rigid substrates. Several coating techniques are applied, for example spin coating, doctor blade, and dip coating for the active layers, and physical and chemical vapor depositions for the oxide and metal layers. However, such techniques might have limited commercial applications, mostly due to high cost or limited scalability. In addition, various types of surface modifications - most commonly photolithography - are utilized to enhance the power output performance of triboelectric sensors/devices. Photolithography is a multi-step process used in micro and nano-fabrication to pattern parts of a thin film. With reference to FIG. 1, the basic procedure includes cleaning, preparation, photoresist application, exposure, developing, and etching. As such, photolithography and similar techniques are complex and expensive.

These and other shortcomings are addressed by aspects of the disclosure.

### SUMMARY

Aspects of the disclosure relate to a triboelectric sensor including a substrate layer, at least one electrode layer, and at least a first triboelectric layer including a triboelectric polymer. The first triboelectric layer is applied to the at least one electrode layer by a process including: dissolving the triboelectric polymer in a solution; and drop casting the solution onto the electrode layer at a temperature below 0 degrees Celsius (°C) to form the first triboelectric layer. The first triboelectric layer has a surface roughness of at least 0.3 micron (µm) as determined by an optical profiler.

Aspects of the disclosure further relate to a method for forming a triboelectric sensor, including: forming a substrate layer and at least one electrode layer overlying the substrate layer; and forming at least a first triboelectric layer on the at least one electrode layer by drop casting a solution of a triboelectric polymer onto the at least electrode layer, wherein the drop casting is performed at a temperature of less than 0 °C.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates a conventional photolithography process.
FIG. 2 is a schematic diagram of an exemplary triboelectric force sensor.
FIG. 3 is a schematic showing performance of the exemplary force sensor of FIG. 2.
FIG. 4 illustrates a process for vapor condensation on a cold surface.
FIG. 5 illustrates an exemplary apparatus for forming a triboelectric polymer according to an aspect of the disclosure
FIG. 6 is an image of a triboelectric sensor formed according to an aspect of the disclosure.
FIG. 7 is a voltage output recording for a triboelectric sensor formed according to an aspect of the disclosure.
FIG. 8 is a graph showing average output voltage as a function of the casting temperature for triboelectric sensors formed according to aspects of the disclosure.
FIG. 9 is s graph showing output voltage as a function of applied pressure for a triboelectric sensor formed according to an aspect of the disclosure.
FIGS. 10A-10C are images showing three-dimensional surface plots for triboelectric films drop casted at room temperature, -10 °C, and -20 °C respectively.
FIG. 11A and 11B are scanning electron microscopy images of triboelectric films drop casted at room temperature and -20 °C, respectively.
FIG. 12A is an optical image of a triboelectric film drop casted at room temperature at 5x magnification.
FIG. 12B is an optical image of a triboelectric film drop casted at room temperature at 10x magnification.
FIG. 12C is an optical image of a triboelectric film drop casted at -20 °C at 5x magnification.
FIG. 12D is an optical image of a triboelectric film drop casted at -20 °C at 10x magnification.
FIG. 13 is a graph showing Fourier Transform Infrared (FT-IR) Spectrometer graphs for triboelectric films drop casted at room temperature and -20 °C.

### DETAILED DESCRIPTION

Conventional techniques for making films such as simple dip coating or spin coating may produce uniform polymeric films. However, in most cases these films might not show high triboelectric performance due to low surface area. To overcome this problem, surface structuring techniques are applied, but they are multi-stepped processes and as such they are costly and time consuming. In addition, they cannot produce complex and arbitrary shaped architectures and randomly oriented rough films. The present disclosure relates to thin polymeric films having high surface area as the triboelectric active layer, which show significant enhancement in triboelectric response. This is at least partially attributable to the structured high surface area film that increases the friction coefficient between the active layers.

The present disclosure can be understood more readily by reference to the following detailed description of the disclosure and the Examples included therein. In various aspects, the present disclosure pertains to a triboelectric sensor including a substrate layer, at least one electrode layer, and at least a first triboelectric layer including a triboelectric polymer. The first triboelectric layer is applied to the at least one electrode layer by a process including: dissolving the triboelectric polymer in a solution; and drop casting the solution onto the electrode layer at a temperature below 0 degrees Celsius (°C) to form the first triboelectric layer. The first triboelectric layer has a surface roughness of at least 0.3 micron (µm) as determined by an optical profiler.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a triboelectric polymer" includes mixtures of two or more triboelectric polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Triboelectric Sensor

In this disclosure, a porous triboelectric polymeric film that is formed at subzero temperature is described. It may be integrated into an electrode touch and/or force sensor and provide elevated triboelectric performance.

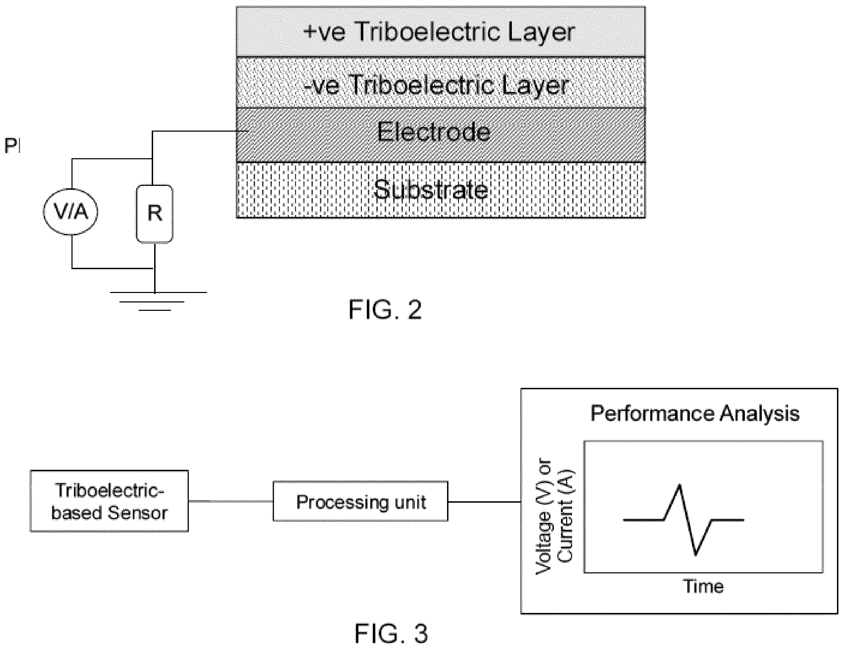

Triboelectric technology is based on the principle of tribo-electricity and electrostatic potential differential between two surfaces of different electro-affinity (+ve and -ve triboelectric layers). With reference to FIGS. 2 and 3, force level is detected by measuring the voltage drop across the electrical load (resistor) connected to the bottom electrode or the current flows. Of note, the +ve triboelectric layer might not be a physical part of the sensor; the +ve layer may be provided by an external material such as a human finger or other material that has an electro affinity opposite that of the -ve triboelectric layer.

Triboelectric performance will be enhanced if a higher contact surface area is created between the two triboelectric layers in contact due to an increase in the friction coefficient. Porous surfaces possess extremely high specific surface areas, thus allowing their use in a large variety of applications including triboelectric-based technology.

Fundamentally, the triboelectric sensor according to the present disclosure depends on the surface charge density from charges that are generated during the contact electrification process between the triboelectric layers. Based on the chemical structure and material properties, various metals and dielectric materials have different tendencies to donate and accept electrons. Different metals and dielectric materials can be arranged in an order according to their tendency to donate or accept electrons. Additionally, the charge density is highly affected by the interfacial contact area between the two triboelectric layers, and upon stimulus of mechanical forces the interfacial area deforms, causing an increase in the voltage and/or current response.

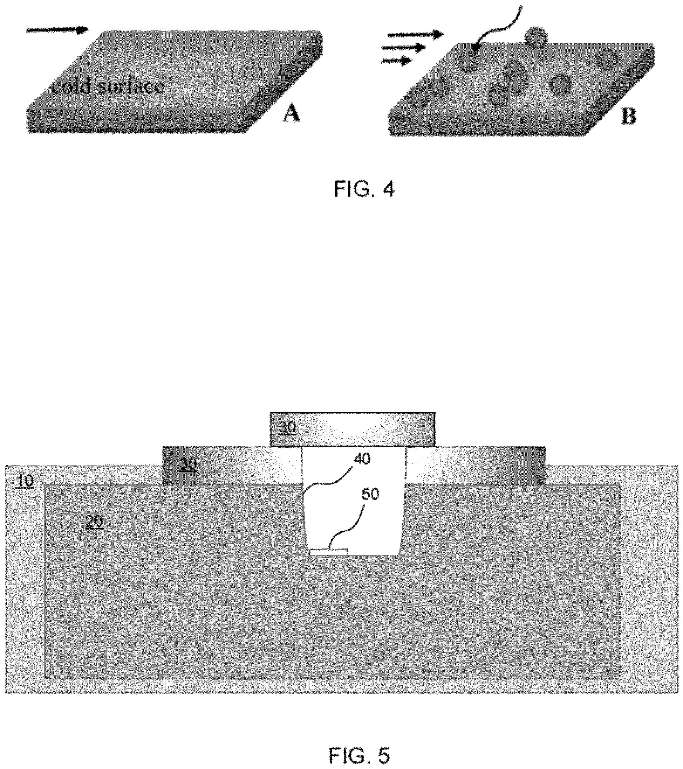

At subzero temperature, water vapor condenses on the surface forming frozen droplets that will act as a mold according to which the polymer film will form and have sponge-like structure, as shown in FIG. 4. Subsequently, these droplets will evaporate as the film dries and cures. In addition, the created highly surface and porous films are likely less dense and more elastic and such properties will apparently enhance the overall triboelectric effect, as the film will be potentially deformed further upon applying higher mechanical stresses.

Accordingly, aspects of the disclosure relate to a triboelectric sensor including a substrate layer, at least one electrode layer, and at least a first triboelectric layer including a triboelectric polymer. The first triboelectric layer is applied to the at least one electrode layer by a process including: dissolving the triboelectric polymer in a solution; and drop casting the solution onto the electrode layer at a temperature below 0 degrees Celsius (°C) to form the first triboelectric layer. The first triboelectric layer has a surface roughness of at least 0.3 micron (µm) as determined by an optical profiler.

In some aspects the triboelectric polymer includes poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.

The cross-linkable polycarbonate may include photoactive polycarbonate (XPC) and isofluoropropyl polyhedral oligomeric silsesquioxane (F-POSS). The cross-linkable polycarbonate includes in some aspects from about 70 wt% to about 99 wt% XPC and from about 1 wt% to about 30 wt% F-POSS.

XPC is a photoactive cross-linkable polycarbonate resin that includes about 0.5 mole % to about 5 mole % endcap groups derived from the monohydroxybenzophenone, including from about 1 mole % to about 3 mole, or from about 1.7 mole % to about 2.5 mole %, or from about 2 mole % to about 2.5 mole %, or from about 2.5 mole % to about 3.0 mole %, or from about 3.5 mole % to about 4.0 mole % endcap groups derived from the monohydroxybenzophenone. Most desirably, the monohydroxybenzophenone is 4-hydroxybenzophenone. In a particular aspect the resin includes about 3.5 mole % endcap groups derived from 4-hydroxybenzophenone, as shown in formula (1) below:

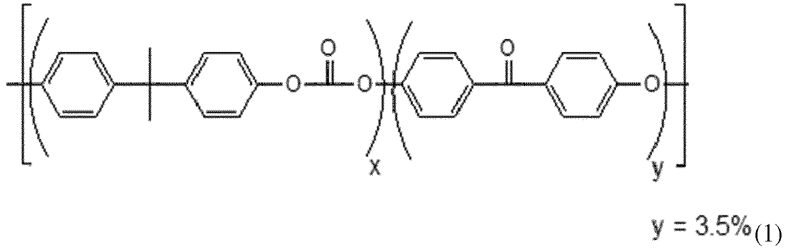

XPC may be formed in accordance with the methods described in U.S. Patent Publication No. 2017/0247507, the disclosure of which is incorporated herein by this reference in its entirety.

In one aspect the XPC is derived from bisphenol-A polycarbonate and comprises from about 0.1 mole % to about 5 mole % benzophenone moieties. In a particular aspect the XPC is derived from bisphenol-A polycarbonate and comprises about 3.5 mole % benzophenone moieties.

F-POSS is isofluoropropyl polyhedral oligomeric silsesquioxane, and has the chemical structure shown in formula (2):

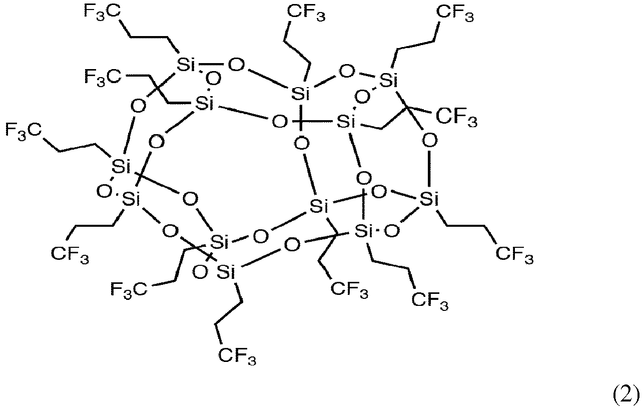

The triboelectric sensor according to claim 2, wherein the triboelectric polymer comprises PVDF-TrFE and the PVDF-TrFE comprises from about 50 wt% to about 80 wt% polyvinylidene difluoride (PVDF) and from about 20 wt% to about 50 wt% trifluoroethylene.

The substrate layer may include any suitable material. In some aspects the substrate layer is a metal, a glass, a composite, a polymer, or a combination thereof. Exemplary polymers include, but are not limited to, poly(methyl methacrylate) (PMMA), silicon, polyethylene naphthalate (PEN), polyethylene terephthalate (PET), polyetherimide (PEI), polycarbonate (PC), polyimide (PI), polyetherimide (PEI), copolymers thereof, and combinations thereof.

The triboelectric sensor includes at least one electrode layer. The at least one electrode layer may include any suitable material, including but not limited to tin oxide, cadmium oxide, indium oxide, zinc oxide, magnesium oxide, indium tin oxide (ITO), gold, silver, or a combination thereof.

In some aspects the triboelectric sensor comprises at least two electrode layers.

While as described herein the triboelectric sensor includes at least the first triboelectric layer including the triboelectric polymer formed according to the processes described herein, the triboelectric sensor may include at least a second triboelectric layer in further aspects. The second triboelectric layer may have an electro affinity opposite that of the first triboelectric layer. In some aspects the second triboelectric layer includes poly(methyl methacrylate) (PMMA), rubber, nylon, or a combination thereof.

In yet further aspects the triboelectric sensor includes only the first triboelectric layer including the triboelectric polymer formed according to the processes described herein, and voltage is generated by an external material such as a human finger or other material that has an electro affinity opposite that of the first triboelectric layer.

As described further herein, the triboelectric sensor provides an improved output voltage as compared to conventional triboelectric sensors and/or triboelectric sensors that include a triboelectric layer that has been drop cast at a temperature above zero degrees Celsius (°C). In some aspects the triboelectric sensor provides an output voltage of at least 10 volts (V). In further aspects the triboelectric sensor provides an output voltage of at least 20 V, or at least 50 V, or at least 75 V.

In some aspects the triboelectric sensor provides an output voltage that is at least 100% greater than that of a substantially identical triboelectric sensor having a first triboelectric layer drop cast from a solution at room temperature. In further aspects the triboelectric sensor provides an output voltage that is at least 200% greater, or at least 300% greater, or at least 400% greater, or at least 500% greater, than that of a substantially identical triboelectric sensor having a first triboelectric layer drop cast from a solution at room temperature. As used herein, a "substantially identical triboelectric sensor" is a comparative sensor that includes identical components as the inventive triboelectric sensor, and in the same amounts, except the comparative sensor has a first triboelectric layer that is drop cast from a solution at room temperature instead of below 0 °C.

The first triboelectric layer of the triboelectric sensor has an improved surface roughness as compared to conventional triboelectric sensors and/or triboelectric sensors that include a triboelectric layer that has been drop cast at a temperature above 0 °C. In some aspects the first triboelectric layer has a surface roughness of at least 0.3 micron (µm) as determined by an optical profiler. In further aspects the first triboelectric layer has a surface roughness of at least 0.7 µm, or at least 1.0 µm, or at least 1.5 µm, or at least 1.8 µm, as determined by an optical profiler.

### Methods for Making a Triboelectric Sensor

Aspects of the disclosure relate to methods of making a triboelectric sensor including those methods described herein. A specific method for forming a triboelectric sensor, includes: forming a substrate layer and at least one electrode layer overlying the substrate layer; and forming at least a first triboelectric layer on the at least one electrode layer by drop casting a solution of a triboelectric polymer onto the at least electrode layer, wherein the drop casting is performed at a temperature of less than 0 °C. In some aspects the drop casting is performed at a temperature of less than -10 °C. In further aspects the drop casting is performed at a temperature of about -20 °C. The triboelectric sensor formed according to the method can include any of the components, in any of the amounts, and may have any of the properties described herein.

The triboelectric sensor according to aspects of the disclosure offers shape and design freedom. It may be formed into a higher surface area film, a thin flexible film, and/or a structured polymeric film. The methods described herein result in a sensor having reduced manufacturing costs, providing the option for disposable sensors. In addition, the sensor could be optically transparent, translucent, or opaque depending on the choice of materials. In some aspects the triboelectric sensor could be integrated into 3D structures and surfaces.

Along with triboelectric-based applications such as sensing, actuation, and energy harvesting, the triboelectric sensor described herein could be used in applications where polymeric films having a natural porous structure are desirable, such as electronics, Internet of things, instruments, and biotechnology, allowing their employment in a large variety of applications.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A triboelectric sensor comprising a substrate layer, at least one electrode layer, and at least a first triboelectric layer comprising a triboelectric polymer, wherein the first triboelectric layer is applied to the at least one electrode layer by a process comprising:
   dissolving the triboelectric polymer in a solution; and
   drop casting the solution onto the electrode layer at a temperature below 0 degrees Celsius (°C) to form the first triboelectric layer,
   wherein the first triboelectric layer has a surface roughness of at least 0.3 micron (µm) as determined by an optical profiler.
Aspect 2. The triboelectric sensor according to Aspect 1, wherein the triboelectric polymer comprises poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.
Aspect 3. The triboelectric sensor according to Aspect 1 or 2, wherein the triboelectric polymer comprises cross-linkable polycarbonate comprising photoactive polycarbonate (XPC) and isofluoropropyl polyhedral oligomeric silsesquioxane (F-POSS).
Aspect 4. The triboelectric sensor according to Aspect 3, wherein the cross-linkable polycarbonate comprises from about 70 wt% to about 99 wt% XPC and from about 1 wt% to about 30 wt% F-POSS.
Aspect 5. The triboelectric sensor according to Aspect 2, wherein the triboelectric polymer comprises PVDF-TrFE and the PVDF-TrFE comprises from about 50 wt% to about 80 wt% polyvinylidene difluoride (PVDF) and from about 20 wt% to about 50 wt% trifluoroethylene.
Aspect 6. The triboelectric sensor according to any of Aspects 1 to 5, wherein the substrate layer comprises a metal, a glass, a composite, a polymer, or a combination thereof.
Aspect 7. The triboelectric sensor according to any of Aspects 1 to 6, wherein the triboelectric sensor provides an output voltage of at least 10 volts (V).
Aspect 8. The triboelectric sensor according to any of Aspects 1 to 7, wherein the triboelectric sensor provides an output voltage of at least 75 volts (V).
Aspect 9. The triboelectric sensor according to any of Aspects 1 to 8, wherein the first triboelectric layer has a surface roughness of at least 1.0 µm as determined by an optical profiler.
Aspect 10. The triboelectric sensor according to any of Aspects 1 to 10, wherein the at least one electrode layer comprises tin oxide, cadmium oxide, indium oxide, zinc oxide, magnesium oxide, indium tin oxide (ITO), gold, silver, or a combination thereof.
Aspect 11. The triboelectric sensor according to any of Aspects 1 to 10, wherein the triboelectric sensor comprises at least two electrode layers.
Aspect 12. The triboelectric sensor according to any of Aspects 1 to 11, wherein the triboelectric sensor comprises at least a second triboelectric layer having an electro affinity opposite that of the first triboelectric layer.
Aspect 13. The triboelectric sensor according to Aspect 12, wherein the second triboelectric layer comprises poly(methyl methacrylate) (PMMA), rubber, nylon, or a combination thereof.
Aspect 14. The triboelectric sensor according to any of Aspects 1 to 13, wherein the triboelectric sensor provides an output voltage that is at least 500% greater than that of a substantially identical triboelectric sensor having a first triboelectric layer drop cast from a solution at room temperature.
Aspect 15. A method for forming a triboelectric sensor, comprising:
   forming a substrate layer and at least one electrode layer overlying the substrate layer; and
   forming at least a first triboelectric layer on the at least one electrode layer by drop casting a solution of a triboelectric polymer onto the at least electrode layer, wherein the drop casting is performed at a temperature of less than 0 °C.
Aspect 16. The method according to Aspect 15, wherein the drop casting is performed at a temperature of less than -10 °C.
Aspect 17. The method according to Aspect 15, wherein the drop casting is performed at a temperature of about -20 °C.
Aspect 18. The method according to any of Aspects 15 to 17, wherein the first triboelectric layer has a surface roughness of at least 0.3 µm as determined by an optical profiler.
Aspect 19. The method according to any of Aspects 15 to 18, wherein the triboelectric polymer comprises poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.
Aspect 20. The method according to any of Aspects 15 to 19, wherein the triboelectric polymer comprises cross-linkable polycarbonate comprising photoactive polycarbonate (XPC) and isofluoropropyl polyhedral oligomeric silsesquioxane (F-POSS).
Aspect 21. The method according to Aspect 20, wherein the cross-linkable polycarbonate comprises from about 70 wt% to about 99 wt% XPC and from about 1 wt% to about 30 wt% F-POSS.
Aspect 22. The method according to Aspect 19, wherein the triboelectric polymer comprises PVDF-TrFE and the PVDF-TrFE comprises from about 50 wt% to about 80 wt% polyvinylidene difluoride (PVDF) and from about 20 wt% to about 50 wt% trifluoroethylene.
Aspect 23. The method according to any of Aspects 15 to 22, wherein the substrate layer comprises a metal, a glass, a composite, a polymer, or a combination thereof.
Aspect 24. The method according to any of Aspects 15 to 23, wherein the triboelectric sensor provides an output voltage of at least 10 volts (V).
Aspect 25. The method according to any of Aspects 15 to 24, wherein the triboelectric sensor provides an output voltage of at least 75 volts (V).
Aspect 26. The method according to any of Aspects 15 to 25, wherein the first triboelectric layer has a surface roughness of at least 1.0 µm as determined by an optical profiler.
Aspect 27. The method according to any of Aspects 15 to 26, wherein the at least one electrode layer comprises tin oxide, cadmium oxide, indium oxide, zinc oxide, magnesium oxide, indium tin oxide (ITO), gold, silver, or a combination thereof.
Aspect 28. The method according to any of Aspects 15 to 27, wherein the triboelectric sensor comprises at least two electrode layers.
Aspect 29. The method according to any of Aspects 15 to 28, wherein the triboelectric sensor comprises at least a second triboelectric layer having an electro affinity opposite that of the first triboelectric layer.
Aspect 30. The method according to Aspect 29, wherein the second triboelectric layer comprises poly(methyl methacrylate) (PMMA), rubber, nylon, or a combination thereof.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Polymeric Film Preparation:

To achieve low temperatures prior to deposition, and with reference to FIG. 5, a chiller (10) was used to cool the substrate. A 50/50 volume % of ethylene glycol and water (20) was used to achieve the cooling effect and maintain a uniform temperature throughout. The chiller was covered using foam (30) to minimize heat transfer with the environment. A beaker (40) was placed inside the chiller through a hole in the foam. The substrate (50) was placed inside the bottom surface of the beaker and was covered with more foam. After the substrate reached the desired temperature, the foam covering the beaker was removed and 30 drops of the active material was drop casted onto the substrate and left to freeze for one to two hours. Finally, the substrate with the material was dried at around 50 °C and 1 atmospheric pressure for about two hours and the sample was ready for use.

### Triboelectric Sensor Fabrication and Materials Synthesis:

Indium tin oxide (ITO) coated glass (2.54x2.54 square centimeters (cm²)) was cleaned with acetone, isopropanol (IPA), and deionized water, for 5 minutes each in an ultrasonic bath, followed by blow-drying using high purity nitrogen. The already deposited ITO coating was been used as the electrode layer.

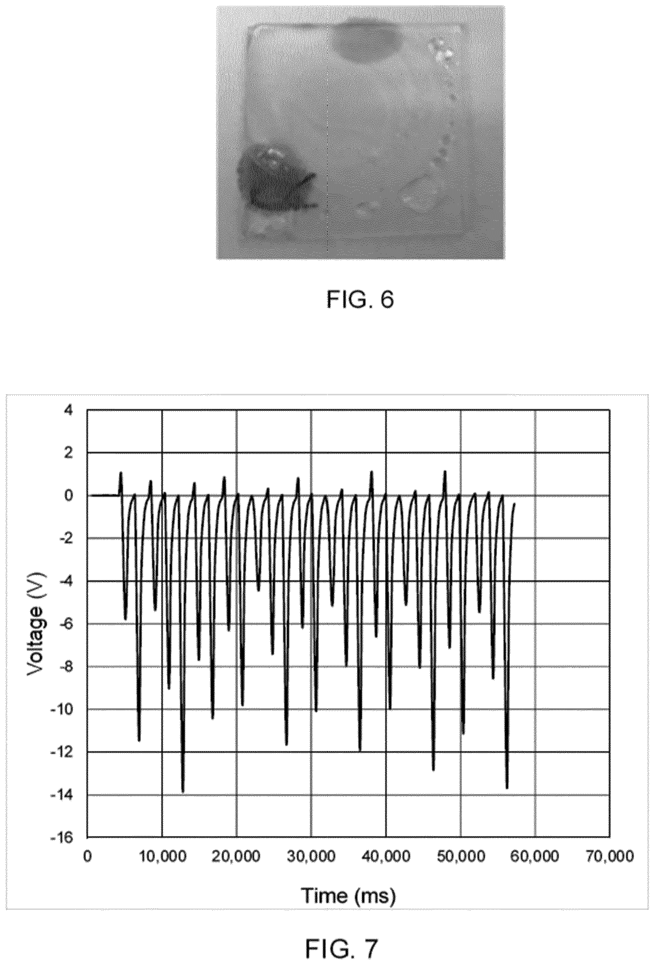

As an example, a 20 wt% solution of polyvinylidene difluoride-trifluoroethylene (PVDF-TrFE) (55/45 PVDF/TrFE) was dissolved in dimethylformamide (DMF). An analytical grade of DMF was used. The materials were mixed at a temperature of 50 °C until full dissolution was observed - approximately 4 hours - and then 30 drops of the mixture was drop casted onto the glass substrate. The samples were then dried/cured in an oven at 50-60 °C for about 2 hours. The solutions were casted at room temperature, 0 °C, -10 °C, and -20 °C at a humidity of 50-60 % relative humidity (RH). The films had an average thickness of approximately 70-130 micron (µm). FIG. 6 shows an optical image of the polymeric film that was drop casted at subzero temperature.

### Triboelectric Touch/Force Sensor Characterization:

Voltage generated by the touch/force sensor was obtained using Keithley Electrometer 6514 and Sourcemeter 6430. Measurements were conducted as a function of force, achieved by varying the pressure (Pressure = Force/Area) applied to the sensor/triboelectric layer. The sample was attached to a linear motor sample holder using double sided tape. The distance was then fixed such that the force applied onto the sample is varied. The output volts from the samples were then measured using either the sourcemeter or electrometer. The sourcemeter/electrometer was connected to the sample through a breadboard on which a 1 gigaohm (GQ) resistor was placed. The current source was set at 0.000 picoamps (pA) where the maximum voltage value that could be read is 21 volts (V) as per sourcemeter limits, while the electrometer can measure higher voltage values, but with lower accuracy as compared with the sourcemeter. LabVIEW code was used to record the electrical voltage generated upon contact with the triboelectric polymeric layer. Force applied to the sensor was recorded using a load cell installed in a custom-made fabricated case to hold the sensor in place (with a limit of 22 newtons (N)). Both the voltage and force measurements were recorded at the same time to simultaneously read their corresponding outputs. FIG. 7 shows the voltage output recording from the presented triboelectric sensor drop casted at -10 °C upon dynamic excitement when using a PVDF-TrFE as the -ve triboelectric layer and a nitrile glove as the +ve triboelectric layer under a force of around 7N.

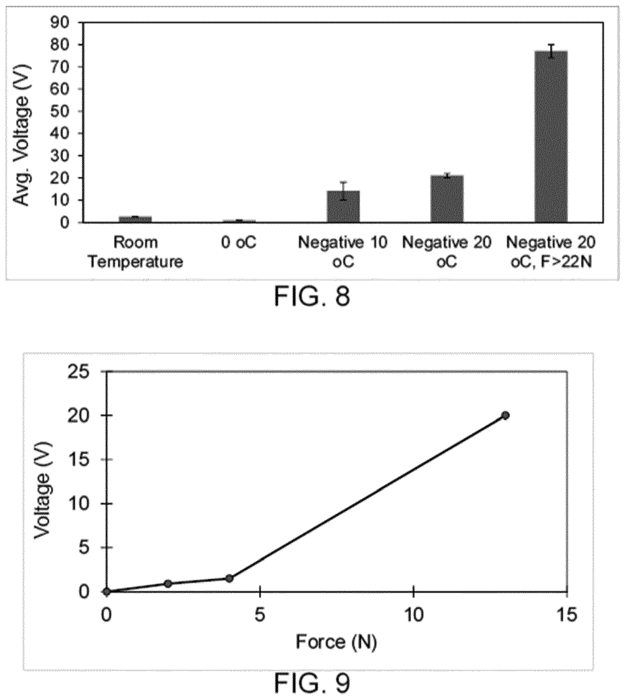

FIG. 8 shows average output voltage as a function of casting temperature for a polymeric film/sensor upon dynamic excitement when using a PVDF-TrFE as the -ve triboelectric layer and a nitrile glove as the +ve triboelectric layer, under constant applied force, while FIG. 9 shows output voltage as a function of applied pressure for a polymeric film/sensor casted at -20 °C upon dynamic excitement when using a PVDF-TrFE as the -ve triboelectric layer and a nitrile glove as the +ve triboelectric layer. The results shown in these figures demonstrate that the average output response increases as the casting temperature decreases below freezing (0 °C). It is believed that this is at least partially due to more charge density being generated upon the friction effect and/or an increase in the surface area of the film. Also with reference to FIG. 8, it can be seen that a film casted at - 20 °C could achieve a very high voltage output in excess of 70 volts with an area of less than 1 square centimeter (cm²).

### Surface Analysis Measurements and Film Morphology using Zygo Optical Profiler and Scanning Electron Microscopy:

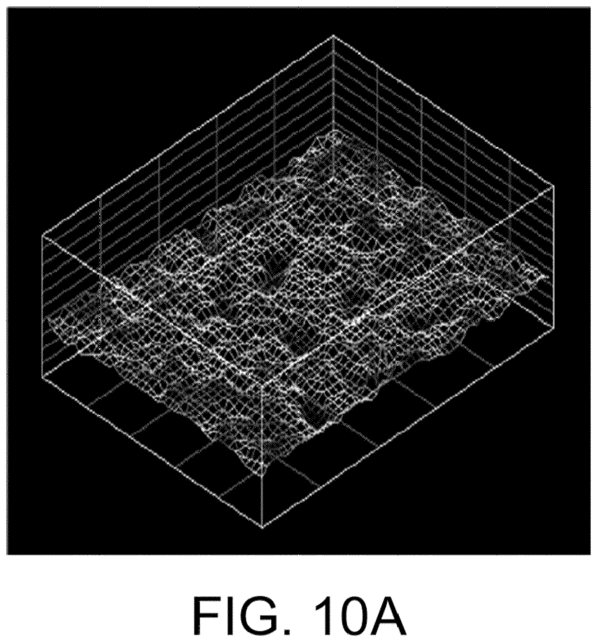

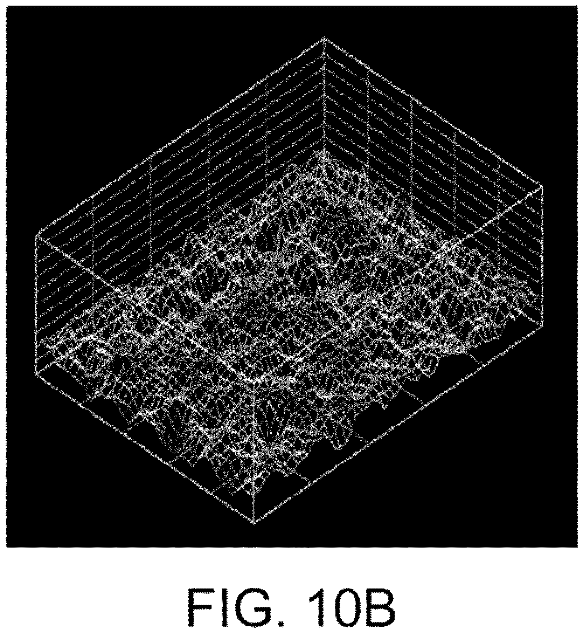

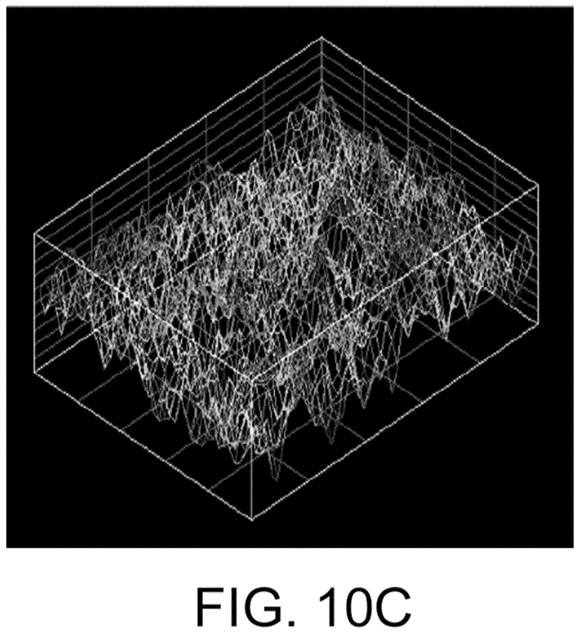

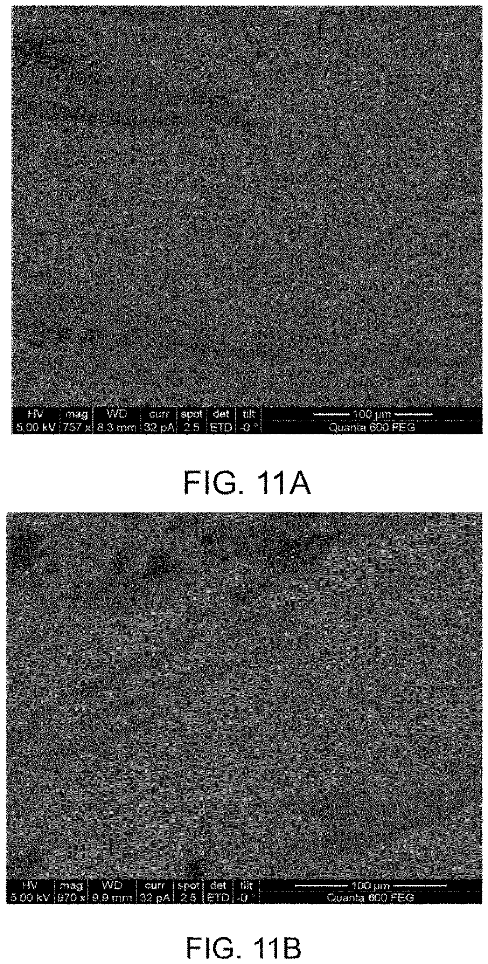

FIGS. 10A-10C illustrate 3D plots for triboelectric films drop casted at room temperature, -10 °C, and -20 °C respectively. Surface topography analysis reveals that as the casting temperature decreases, the film surface tends to be more irregular, rougher, and thus has a higher surface area. Similar observations and conclusions can be made comparing the scanning electron microscopy (SEM) images in FIG. 11A (room temperature) and 11B (-20 °C), which show a more irregular surface with more holes and defects in the film processed at the lower temperature. In addition, the film roughness increased from 0.127 µm (room temperature film) to 1.824 µm (-20 °C film).

### Bottom Films Surface Analysis using Optical Microscopic Images:

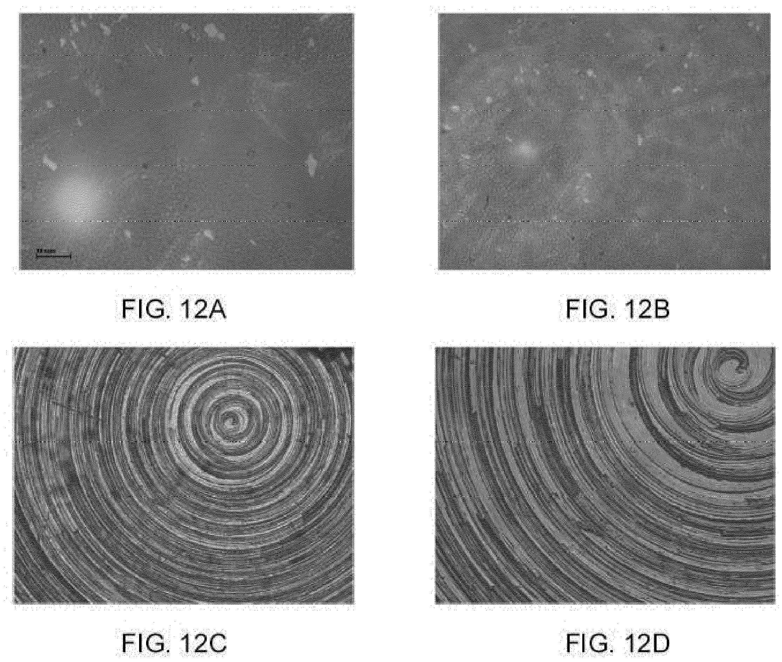

Optical images of the bottom surface of the films are shown in FIG. 12A (room temperature 5x magnification), FIG. 12B (room temperature, 10x magnification), FIG. 12C (-20 °C, 5x magnification) and FIG. 12D (-20 °C, 10x magnification). As observed, decreasing the temperature of the substrate prior to the deposition of the polymeric film creates spiral creases, which increases the surface area of the film, resulting in the substantially higher voltage output of the film.

### Vibration Analysis for β Phase Crystals by FT-IR spectra:

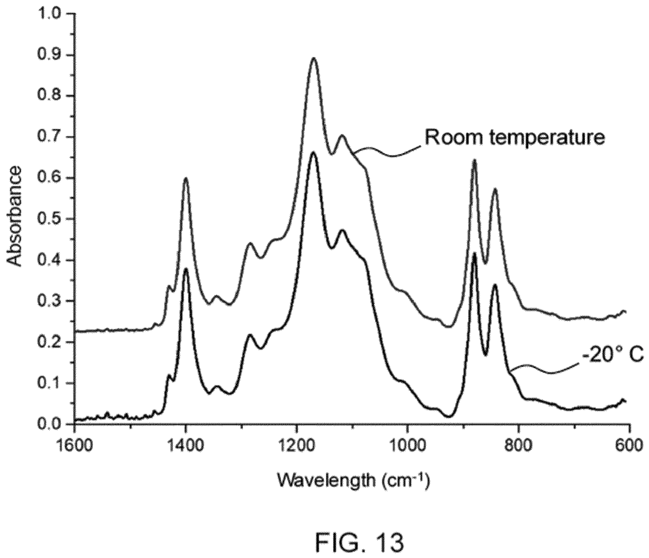

The films formed at room temperature and -20 °C were analyzed with a Fourier Transform Infrared (FT-IR) Spectrometer. Results are shown in FIG. 13. Each phase of the PVDF-TrFE copolymer provides a characteristic FTIR spectrum. Details of the absorption band assignments are known; several intense bands are related to β phase of PVDF-TrFE. The absorption bands at 1284 cm⁻¹ and 843 cm⁻¹ are associated with CF₂ symmetric stretching mode, while absorption bands at 1170 cm⁻¹ and 880 cm⁻¹ are related to antisymmetric CF₂ stretching vibrations. A band at ∼ 510 cm⁻¹ (not shown in this spectra analysis) and the band at 1400 cm⁻¹ are assigned to the CF₂ bending mode and the wagging vibration of CH₂, respectively. The FT-IR spectra for PVDF-TrFE films processed at room temperature and -20 °C are almost identical. The results shown in FIG. 13 imply that the film-processing temperature has no effect on the crystalline structure of the film. Thus, it is apparent that the increase in voltage output of the triboelectric sensor is due to the physical appearance and properties of the film surface evidenced by the images presented herein.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A triboelectric sensor comprising a substrate layer, at least one electrode layer, and at least a first triboelectric layer comprising a triboelectric polymer, wherein the first triboelectric layer is applied to the at least one electrode layer by a process comprising:
dissolving the triboelectric polymer in a solution; and
drop casting the solution onto the electrode layer at a temperature below 0 degrees Celsius (°C) to form the first triboelectric layer,
wherein the first triboelectric layer has a surface roughness of at least 0.3 micron (µm) as determined by an optical profiler.

2. The triboelectric sensor according to claim 1, wherein the triboelectric polymer comprises poly(vinylidenefluoride-co-trifluoroethylene) (PVDF-TrFE), cross-linkable polycarbonate, polyvinylidene difluoride (PVDF), polyvinyl chloride (PVC), polytetrafluoroethylene (PTFE), polyvinylidene chloride (PVDC), or a combination thereof.

3. The triboelectric sensor according to claim 1 or 2, wherein the triboelectric polymer comprises cross-linkable polycarbonate comprising photoactive polycarbonate (XPC) and isofluoropropyl polyhedral oligomeric silsesquioxane (F-POSS).

4. The triboelectric sensor according to claim 3, wherein the cross-linkable polycarbonate comprises from about 70 wt% to about 99 wt% XPC and from about 1 wt% to about 30 wt% F-POSS.

5. The triboelectric sensor according to claim 2, wherein the triboelectric polymer comprises PVDF-TrFE and the PVDF-TrFE comprises from about 50 wt% to about 80 wt% polyvinylidene difluoride (PVDF) and from about 20 wt% to about 50 wt% trifluoroethylene.

6. The triboelectric sensor according to any of claims 1 to 5, wherein the substrate layer comprises a metal, a glass, a composite, a polymer, or a combination thereof.

7. The triboelectric sensor according to any of claims 1 to 6, wherein the triboelectric sensor provides an output voltage of at least 10 volts (V).

8. The triboelectric sensor according to any of claims 1 to 7, wherein the triboelectric sensor provides an output voltage of at least 75 volts (V).

9. The triboelectric sensor according to any of claims 1 to 8, wherein the first triboelectric layer has a surface roughness of at least 1.0 µm as determined by an optical profiler.

10. The triboelectric sensor according to any of claims 1 to 10, wherein the at least one electrode layer comprises tin oxide, cadmium oxide, indium oxide, zinc oxide, magnesium oxide, indium tin oxide (ITO), gold, silver, or a combination thereof.

11. The triboelectric sensor according to any of claims 1 to 10, wherein the triboelectric sensor comprises at least two electrode layers.

12. The triboelectric sensor according to any of claims 1 to 11, wherein the triboelectric sensor comprises at least a second triboelectric layer having an electro affinity opposite that of the first triboelectric layer.

13. The triboelectric sensor according to claim 12, wherein the second triboelectric layer comprises poly(methyl methacrylate) (PMMA), rubber, nylon, or a combination thereof.

14. The triboelectric sensor according to any of claims 1 to 13, wherein the triboelectric sensor provides an output voltage that is at least 500% greater than that of a substantially identical triboelectric sensor having a first triboelectric layer drop cast from a solution at room temperature.

15. A method for forming a triboelectric sensor, comprising:
forming a substrate layer and at least one electrode layer overlying the substrate layer; and
forming at least a first triboelectric layer on the at least one electrode layer by drop casting a solution of a triboelectric polymer onto the at least electrode layer, wherein the drop casting is performed at a temperature of less than 0 °C.
